# FASCICULE DE BREVET EUROPEEN

(11) **EP 3 867 503 B1**
(45) Date de publication et mention de la délivrance du brevet: **07.06.2023**
(21) Numéro de dépôt: 19835451.6
(22) Date de dépôt: 19.11.2019
(51) Int. Cl.: F01M 5/00, F16N 39/02, F01D 25/12, F01D 25/18, F02C 7/32, F02C 7/14, F02C 7/20

(54) **ENSEMBLE MOTEUR POUR AERONEF PRESENTANT UN SUPPORT DE SYSTEME D'ECHANGEUR AIR-HUILE A FIXATION OPTIMISEE**
MOTORANORDNUNG FÜR EIN FLUGZEUG MIT LUFTÖLTAUSCHER-SYSTEMTRÄGER MIT OPTIMIERTER BEFESTIGUNG
ENGINE ASSEMBLY FOR AN AIRCRAFT HAVING AN AIR-OIL EXCHANGER SYSTEM SUPPORT WITH OPTIMIZED ATTACHMENT

(30) Priorité: 03.12.2018 FR 1872249
(43) Date de publication de la demande: 25.08.2021
(73) Titulaire: SAFRAN AIRCRAFT ENGINES, 75015 Paris (FR)
(72) Inventeur: HELLEGOUARCH, Antoine, 77550 MOISSY-CRAMAYEL (FR); TESNIERE, Marc, 77550 MOISSY-CRAMAYEL (FR)
(74) Mandataire: Brevalex
(86) Numéro de dépôt international: PCT/FR2019/052743
(87) Numéro de publication internationale: WO 2020/115382

(56) Documents cités:
- EP-A1- 3 115 588
- FR-A1- 3 029 171
- FR-A1- 3 046 200
- US-A1- 2008 028 763
- US-A1- 2012 060 466
- US-A1- 2017 122 210
- US-A9- 2017 248 077

## Description

### DOMAINE TECHNIQUE

L'invention se rapporte au domaine des turbomachines d'aéronef. Plus précisément, l'invention concerne un ensemble moteur d'aéronef comportant une turbomachine à double flux équipée d'un système d'échangeur air-huile dans son compartiment inter-veines.

L'invention s'applique en particulier à un turboréacteur à double flux, et encore plus préférentiellement à un turboréacteur à double flux et à double corps.

### ÉTAT DE LA TECHNIQUE ANTÉRIEURE

Le compartiment inter-veines d'une turbomachine à double flux loge généralement de nombreux équipements. Il peut s'agir en particulier d'un système d'échangeur air-huile, dont la fonction est de refroidir l'huile de lubrification des éléments tournants de la turbomachine avec de l'air prélevé en dehors du compartiment, dans la veine secondaire. US2008/028763 A1 décrit un exemple d'une turbomachine comportant un système d'échangeur.

Le système d'échangeur air-huile est associé à un support, qui est habituellement relié au carter moteur par des moyens de liaison agencés dans le compartiment inter-veines. Ces moyens de liaison doivent contribuer à positionner de manière précise le système d'échangeur par rapport au capotage inter-veines délimitant le compartiment inter-veines radialement vers l'extérieur. Ce positionnement précis du système d'échangeur s'explique par le besoin de faire coïncider au mieux un passage d'admission d'air agencé à travers le capotage inter-veines, et une écope d'admission d'air du système d'échangeur.

Cependant, dans cet agencement, le capotage inter-veines et le système d'échangeur air-huile sont soumis à des températures différentes pouvant conduire à une dilatation différentielle conséquente, difficilement compatible avec le besoin de positionnement précis exposé ci-dessus. En effet, le système d'échangeur est exposé à la chaleur du carter moteur auquel est relié son support, tandis que le capotage inter-veines est refroidi par le flux secondaire traversant la veine secondaire délimitée intérieurement par ce même capotage inter-veines.

Il subsiste par conséquent un besoin d'amélioration de la conception des solutions existantes, de manière à améliorer la précision du positionnement relatif entre le capotage inter-veines et le système d'échangeur air-huile.

### EXPOSÉ DE L'INVENTION

Pour répondre à ce besoin, l'invention a pour objet un ensemble moteur pour aéronef comprenant une turbomachine à double flux ainsi qu'un mât d'accrochage de la turbomachine destiné à assurer l'accrochage de la turbomachine sur un élément de voilure de l'aéronef, la turbomachine comprenant un système d'échangeur air-huile agencé dans un compartiment inter-veines délimité radialement vers l'extérieur par un capotage inter-veines, le système d'échangeur étant alimenté par de l'air provenant d'une veine secondaire de la turbomachine délimitée radialement vers l'intérieur par le capotage inter-veines, et le système d'échangeur étant supporté par un support agencé dans le compartiment inter-veines.

Selon l'invention, le support est relié mécaniquement au mât d'accrochage par des moyens de liaison traversant le capotage inter-veines.

L'invention rompt ainsi drastiquement avec les solutions antérieures, en prévoyant de relier le support du système d'échangeur au mât d'accrochage. Cela permet d'atténuer fortement les dilatations thermiques différentielles entre le capotage inter-veines et l'ensemble formé par le système d'échangeur et son support. Le positionnement relatif entre ce système d'échangeur et le capotage inter-veines s'en trouve avantageusement facilité, car il s'avère moins tributaire des effets de dilatation différentielle.

L'invention présente par ailleurs au moins l'une des caractéristiques optionnelles suivantes, prises isolément ou en combinaison.

Les moyens de liaison sont configurés pour permettre au support d'être déplacé entre une position de fonctionnement plaçant le système d'échangeur à l'intérieur du compartiment inter-veines, de préférence de manière à ce qu'il recouvre radialement un ou plusieurs équipements dans le compartiment inter-veines, et une position de maintenance dans laquelle ce support est davantage écarté d'un axe central longitudinal de la turbomachine que dans la position de fonctionnement.

Grâce à ce possible déplacement, l'accès à l'échangeur est facilité durant les opérations de maintenance. A cet égard, il est noté que l'ensemble moteur est préférentiellement configuré de sorte que la position de maintenance soit uniquement accessible après un retrait ou une ouverture du capotage inter-veines.

Les moyens de liaison comprennent des bielles de liaison articulées au moins à leur extrémité de raccordement au mât d'accrochage. Cette articulation permet une mise en mouvement aisée du support, par exemple pour générer une rotation de ce support par rapport au mât, ou bien d'autres mouvements relatifs comme du type à parallélogramme déformable.

Les bielles de liaison sont rigidement liées au support.

L'ensemble comprend des moyens de maintien du support dans sa position de fonctionnement.

Selon une première possibilité, les moyens de maintien comprennent des bielles de maintien télescopiques présentant des extrémités de raccordement au support, ainsi que des extrémités de raccordement à un carter moteur.

Selon une seconde possibilité, éventuellement combinable à la première, les moyens de maintien comprennent un axe de maintien logé dans un premier orifice de logement prévu sur le mât d'accrochage, ainsi que dans un second orifice de logement prévu sur une partie de maintien du support, l'axe de maintien étant maintenu dans ses orifices de logement associés par l'intermédiaire d'un couvercle monté sur la partie de maintien du support, et de préférence via un moyen élastique de rappel agencé entre le couvercle et l'axe de maintien pour forcer ce dernier en direction du premier orifice de logement.

De préférence, le système d'échangeur comprend au moins un conduit d'alimentation en air dont une écope d'admission coopère avec un passage d'admission d'air agencé à travers le capotage inter-veines.

De préférence, l'écope d'admission présente une section de passage d'air commandable, de préférence via un volet commandé monté mobile sur l'écope d'admission, ou sur le passage d'admission d'air prévu à travers le capotage inter-veines.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels :
- la figure 1 représente une vue schématique de côté d'un turboréacteur à double flux selon l'invention ;
- la figure 2 représente une vue schématique en coupe d'une partie du turboréacteur montré sur la figure précédente, montrant un système d'échangeur air-huile ;
- la figure 3a est une vue en perspective de la partie montrée sur la figure précédente, avec le support du système d'échangeur agencé en position de fonctionnement ;
- la figure 3b est une vue schématique en coupe prise selon un plan transversal de la partie du turboréacteur montrée sur la figure précédente ;
- la figure 4a est une vue similaire à celle de la figure 3a, avec le support du système d'échangeur agencé en position de maintenance ;
- la figure 4b est une vue schématique en coupe prise selon un plan transversal de la partie du turboréacteur montrée sur la figure précédente ;
- la figure 5 est une vue en perspective similaire à celle de la figure 3a, avec le support du système d'échangeur se présentant selon un autre mode de réalisation préféré de l'invention ; et
- la figure 6 est une vue en coupe transversale d'une partie du turboréacteur montré sur la figure précédente.

### EXPOSÉ DÉTAILLÉ DE MODES DE RÉALISATION PARTICULIERS

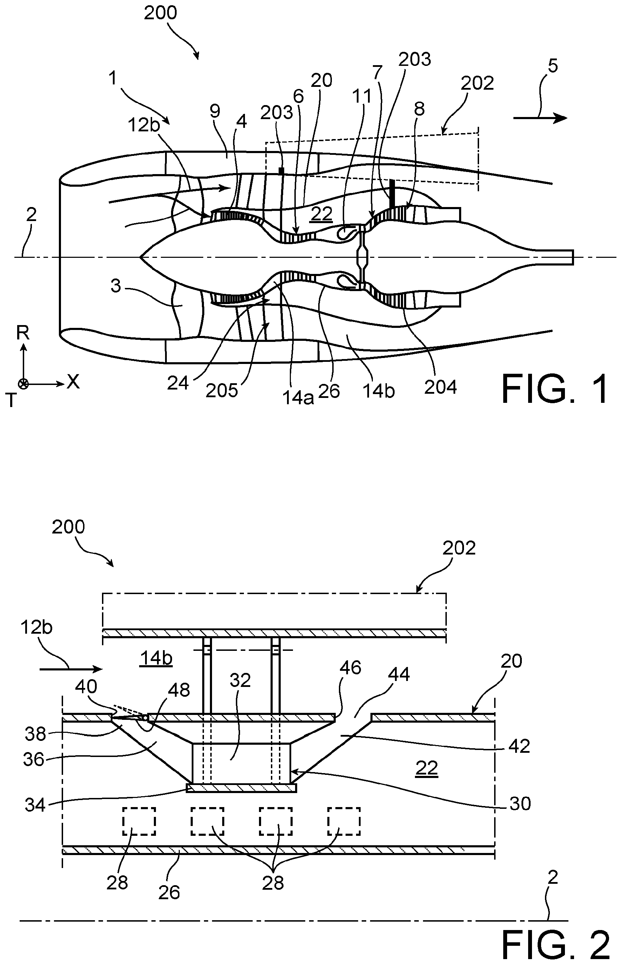

En référence tout d'abord à la figure 1, il est représenté un ensemble moteur d'aéronef 200 comprenant un turboréacteur 1, un mât 202 d'accrochage du turboréacteur, et deux suspensions 203 reliant le turboréacteur 1 au mât 202. Plus précisément, le turboréacteur 1 présente une conception à double flux et à double corps. Il est relié au mât 202 dont seule la structure rigide a été représentée schématiquement. Cette structure rigide, également dénommée structure primaire, est destinée à la reprise des efforts provenant du turboréacteur 1. Le mât est également équipé de structures secondaires (non représentées), sous forme de carénages aérodynamiques. La structure rigide du mât est elle-même fixée sur un élément structural de l'aéronef, par exemple sous un caisson de voilure pour suspendre le turboréacteur sous une aile de l'aéronef.

Les suspensions 203 assurent l'interface mécanique entre le turboréacteur 1 et la structure rigide du mât d'accrochage 202. Pour compléter cette interface, il est classiquement prévu des bielles de reprise de poussée (non représentées), par exemple reliant un carter intermédiaire 205 du turboréacteur, à la suspension arrière 203. La suspension avant 203 relie par exemple une partie supérieure du carter intermédiaire 205 à une extrémité avant du mât 202, tandis que la suspension arrière relie par exemple un carter inter-turbine 204 au mât 202.

La turbomachine 1 présente un axe central longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

La veine secondaire 14b est également délimitée radialement vers l'intérieur par un capotage inter-veines 20, également dénommé capotage IFS (de l'anglais « *Inner Fan Structure »*). Ce Capotage 20 est généralement monté amovible autour du carter moteur26, ou bien déplaçable entre une position fermée et une position ouverte, par exemple par pivotement. Le capotage inter-veines 20 remplit également la fonction de délimitation radiale extérieure d'un compartiment inter-veines 22, lui-même délimité intérieurement par le carter moteur. Le compartiment inter-veines 22 est délimité vers l'amont par un moyeu 24 du carter intermédiaire 205, avec le capotage 20 s'inscrivant dans la continuité aval d'une virole extérieure de ce carter intermédiaire.

Comme cela a été schématisé sur la figure 2, le compartiment inter-veines 22 loge de nombreux équipements 28 fixés sur le carter moteur 26, et également un système d'échangeur air-huile 30 agencé à proximité de capotage inter-veines 20. Le système 30 permet de refroidir l'huile ayant servi à la lubrification de parties tournantes du turboréacteur, comme les roulements et les engrenages. Ce refroidissement s'opère avec de l'air prélevé dans la veine secondaire 14b. Plus précisément, le système d'échangeur 30 comporte un coeur d'échangeur 32 supporté par un support 34, ainsi qu'un conduit d'alimentation 36 dont une extrémité est reliée au coeur d'échangeur 32. L'autre extrémité de ce conduit 36 forme une écope d'admission d'air 38, qui coopère avec un passage d'admission d'air 40 traversant le capotage inter-veines 20. De préférence, l'écope 38 est agencée affleurante dans le passage 40, comme cela a été schématisé sur la figure 2. Une partie de l'air frais circulant dans la veine secondaire 14b peut ainsi être écopée et circuler dans le conduit 36, avant de rejoindre le coeur d'échangeur 32.

La quantité d'air prélevée dans la veine peut être régulée de toute manière connue de l'homme du métier, pour s'adapter au besoin en refroidissement de l'huile. A titre d'exemple, l'écope d'admission 38 peut présenter une section de passage d'air commandable, via un volet commandé 48 monté mobile sur cette écope d'admission. En fonction de l'angle d'ouverture du volet 48, la section de passage évolue en conditionnant la quantité d'air prélevée. Alternativement, le volet 48 pourrait être monté mobile sur le passage d'admission d'air 40 qui coïncide avec l'écope, avec toujours comme conséquence la variation de la section de passage d'air de cette écope.

Après avoir refroidi l'huile dans le coeur, l'air est extrait de ce dernier par un conduit d'évacuation 42 dont une extrémité 44 coopère avec un passage d'évacuation d'air 46, réalisé à travers le capotage inter-veines 20. L'air peut ainsi rejoindre la veine secondaire 14b, plus en aval.

Le support 34 est relié mécaniquement au mât 202 par des moyens de liaison spécifiques à la présente invention. Dans le premier mode de réalisation montré sur les figures 2 à 4b, ces moyens de liaison prennent la forme de deux bielles de liaison 50 sensiblement parallèles. Chaque bielle 50 présente une extrémité 52 de raccordement au mât 202, via une liaison d'articulation 54 préférentiellement équipée d'une rotule. La liaison d'articulation 54 s'effectue de préférence au niveau de l'extrémité d'un bras 56 solidaire d'un longeron inférieur du mat d'accrochage de 202. Les deux liaisons d'articulation 54, espacées axialement l'une de l'autre, forment ensemble des charnières coaxiales selon un axe 58 parallèle à l'axe central longitudinal 2 du turboréacteur. Bien évidemment, le nombre de ces bielles de liaison 50 pourrait être supérieur à deux. À l'extrémité opposée de chaque bielle, c'est-à-dire au niveau d'une extrémité 60, celle-ci est liée de préférence fixement / rigidement au support 34. De ce fait, la présence des charnières d'axe 58 autorise une rotation selon ce même axe de l'ensemble formé par les bielles de liaison 50, le support 34, et le système d'échangeur 30. Il est noté que de manière facultative, au moins l'une de ces bielles 50 peut présenter un caractère télescopique sur un débattement très limité, typiquement de l'ordre d'un millimètre à quelques millimètres. Cela permet un ajustement précis de la position du support 34 dans le compartiment inter-veines 22, relativement au capotage veine 20. Ce caractère télescopique d'une bielle peut être obtenu par un simple montage glissant de la bielle sur sa charnière formant la liaison d'articulation 54. Il peut permettre notamment d'ajuster l'alignement axial du support 34 parallèlement à l'axe moteur.

À partir de son extrémité 60, chaque bielle de liaison 50 s'étend dans le compartiment 22 avant de traverser le capotage inter-veines 20, pour ensuite s'étendre à travers une partie de la veine secondaire 14b jusqu'à son extrémité 52 de raccordement au mât.

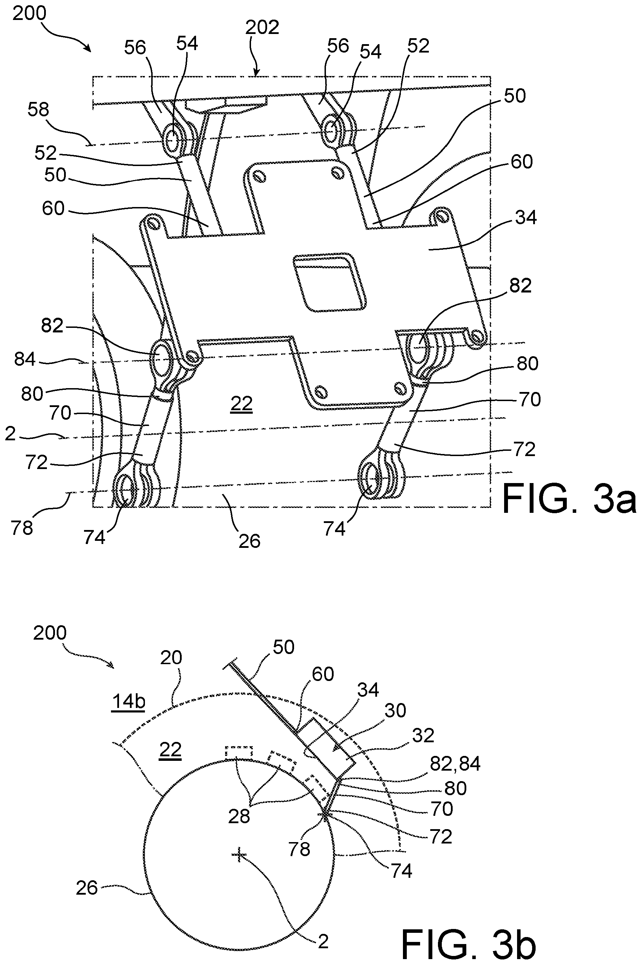

Les figures 2, 3a, 3b montrent l'ensemble 200 dans une configuration telle qu'adoptée durant le vol. Dans cette configuration, le système d'échangeur 30 se situe dans le compartiment inter-veines 22, avec son support 34 agencé dans une position de fonctionnement dans laquelle il recouvre radialement un ou plusieurs autres équipements 28 du compartiment 22. Cette position est maintenue non seulement par la présence des bielles de liaison 50 décrites ci-dessus, mais également grâce à des moyens de maintien spécifiques du support 34, qui vont à présent être décrits.

Dans ce mode de réalisation préféré, les moyens de maintien du support 34 dans sa position de fonctionnement comprennent deux bielles de maintien 70. Chaque bielle 70 présente une extrémité 72 de raccordement au carter moteur 26, via une liaison d'articulation 74 préférentiellement équipée d'une rotule. Les deux liaisons d'articulation 74, espacées axialement l'une de l'autre, forment ensemble des charnières coaxiales selon un axe 78 parallèle à l'axe central longitudinal 2 du turboréacteur. Bien évidemment, le nombre de ces bielles de liaison 70 pourrait être supérieur à deux. À l'extrémité opposée de chaque bielle, c'est-à-dire au niveau d'une extrémité 80, celle-ci est raccordée au support 34 également via une liaison d'articulation 82, préférentiellement équipée d'une rotule. Les deux liaisons d'articulation 82, espacées axialement l'une de l'autre, forment ensemble des charnières coaxiales selon un axe 84 parallèle à l'axe central longitudinal 2 du turboréacteur.

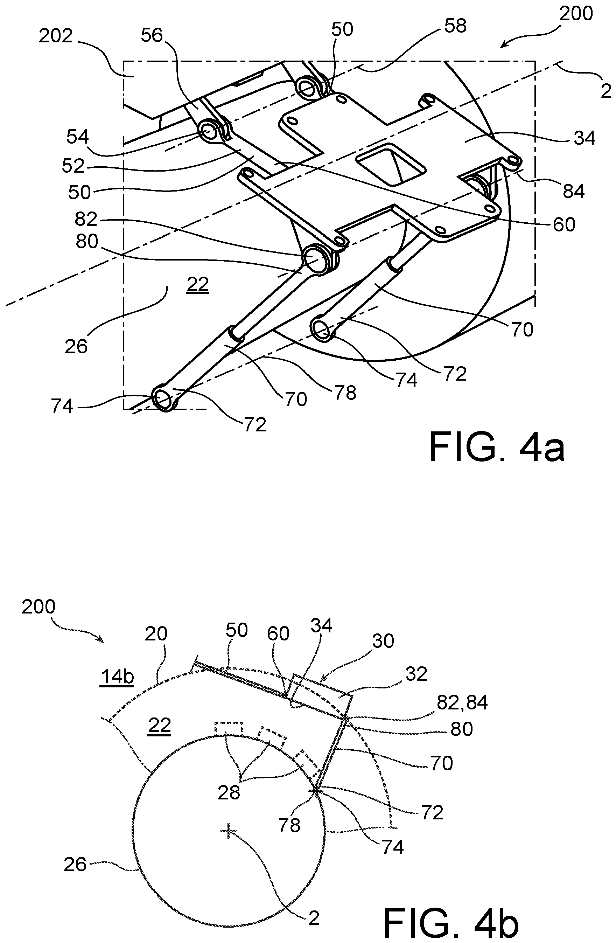

Les bielles de maintien 70 peuvent ainsi servir à maintenir le support 34 dans sa position de fonctionnement, et dans un mode de réalisation préféré, elles peuvent également adopter un caractère télescopique de manière à permettre un déplacement de ce support 34 de sa position de fonctionnement, à une position de maintenance montrée sur les figures 4a et 4b. Dans cette position de maintenance, obtenue par allongement des bielles 70 conduisant à une rotation du support 34 selon l'axe de charnières 58, ce support est davantage écarté de l'axe central longitudinal 2 qu'il ne l'est dans la position de fonctionnement. Cette rotation du support 34 selon l'axe de charnières 58 est autorisée par la rotation des bielles de maintien 70 selon chacun des axes de charnières 78, 84. Les bielles 70 forment ainsi des actionneurs du type vérins pour le déplacement du support 34. Alternativement, un ou plusieurs actionneurs peuvent être adjoints entre le support 34 et le carter moteur 26, de sorte que l'allongement / la rétractation des bielles 70 suive le mouvement de ces actionneurs.

En quelque sorte, la position de maintenance du support 34 permet d'amener ce dernier dans une orientation davantage horizontale et plus écartée du carter moteur 26, facilitant ainsi l'intervention des opérateurs sur le système d'échangeur 30. D'ailleurs, comme cela a été schématisé sur la figure 4b, le décalage entre la position de fonctionnement et la position de maintenance est telle que cette dernière s'avère uniquement accessible après que le capotage inter-veines 22 ait été retiré, où amené en position d'ouverture. En d'autres termes, cette position de maintenance ne peut être atteinte que si le capotage 22 a été préalablement ouvert ou retiré, opération qui est classiquement réalisée avant toute intervention de maintenance sur les équipements 28, 30.

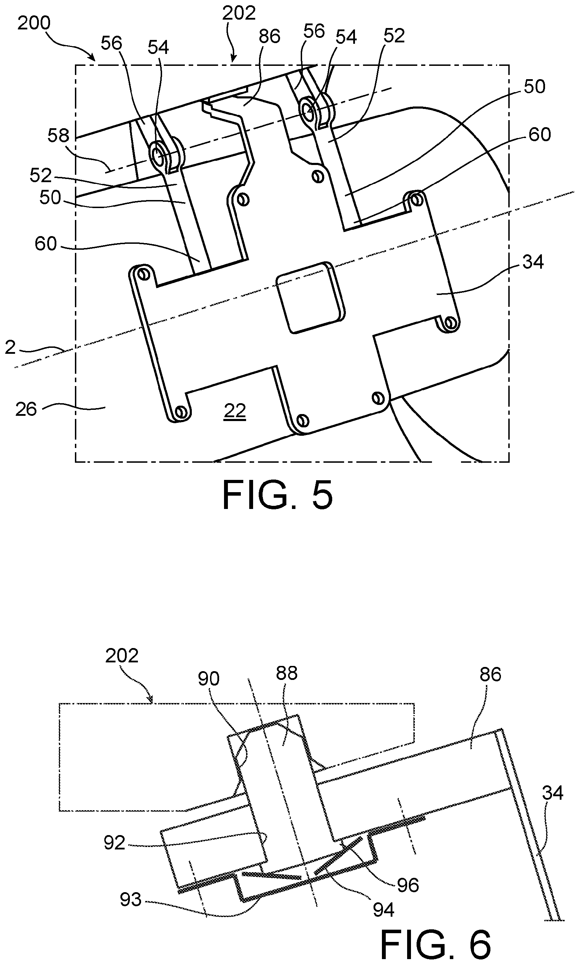

Selon un autre mode de réalisation préféré représenté sur les figures 5 et 6, les bielles de maintien ne sont plus nécessaires, et elles sont remplacées par d'autres moyens de maintien qui vont à présent être décrits.

Il s'agit tout d'abord d'un doigt de verrouillage 86 solidaire du support 34 et incliné par rapport à ce dernier, par exemple d'un angle proche de 90°. Ce doigt 86 forme ainsi une partie de maintien du support, car il coopère avec un axe de maintien 88. L'extrémité de cet axe de maintien 88 en forme de pion est logée dans un premier orifice de logement débouchant 90, prévu dans le mât 202. L'axe de maintien 88 traverse un second orifice de logement 92 pratiqué à travers le doigt 86, ce dernier étant sensiblement parallèle à la portion du mât dans laquelle est pratiqué le premier orifice de logement 90. Une collerette 96 est préférentiellement prévue à l'extrémité de l'axe de maintien 88, pour le maintenir en appui contre le doigt 86 autour du second orifice 92. Pour conserver cette position du doigt 86 garantissant le maintien du support 34 dans sa position de fonctionnement, un couvercle 93 est monté vissé sur la surface opposée du doigt 86. Une rondelle 94 formant un moyen élastique de rappel est alors agencée entre le couvercle 96 et l'axe de maintien 88, pour forcer ce dernier en direction du premier orifice de logement 90, et plaquer la collerette 96 contre le doigt de verrouillage 86.

Pour le montage, le support 34 est d'abord amené dans sa position de fonctionnement, dans laquelle les deux orifices de logement 90, 92 se trouvent alignés. L'axe de maintien 88 est alors inséré, puis la rondelle 96 est mise en place avant l'assemblage par vissage du couvercle 93 sur le doigt de verrouillage 86. Lorsque ces moyens de maintien sont démontés, le passage du support 34 de sa position de fonctionnement à sa position de maintenance peut être réalisé manuellement par l'opérateur, ou bien être provoqué automatiquement par un déplacement du capotage inter-veines 20 vers sa position ouverte.

Bien entendu, diverses modifications peuvent être apportées par l'homme du métier à l'invention qui vient d'être décrite, uniquement à titre d'exemples non limitatifs et selon la portée définie par les revendications annexées.

## Revendications

1. Ensemble moteur (200) pour aéronef comprenant une turbomachine (1) à double flux ainsi qu'un mât (202) d'accrochage de la turbomachine destiné à assurer l'accrochage de la turbomachine sur un élément de voilure de l'aéronef, la turbomachine comprenant un système d'échangeur air-huile (30) agencé dans un compartiment inter-veines (22) délimité radialement vers l'extérieur par un capotage inter-veines (20), le système d'échangeur étant alimenté par de l'air provenant d'une veine secondaire (14b) de la turbomachine délimitée radialement vers l'intérieur par le capotage inter-veines (20), et le système d'échangeur (30) étant supporté par un support (34) agencé dans le compartiment inter-veines (22),
**caractérisé en ce que** ledit support (34) est relié mécaniquement au mât d'accrochage par des moyens de liaison (50) traversant le capotage inter-veines (20).

2. Ensemble moteur selon la revendication 1, **caractérisé en ce que** les moyens de liaison (50) sont configurés pour permettre au support (34) d'être déplacé entre une position de fonctionnement plaçant le système d'échangeur (30) à l'intérieur du compartiment inter-veines (22), de préférence de manière à ce qu'il recouvre radialement un ou plusieurs équipements (28) dans le compartiment inter-veines, et une position de maintenance dans laquelle ce support (34) est davantage écarté d'un axe central longitudinal (2) de la turbomachine que dans la position de fonctionnement.

3. Ensemble moteur selon la revendication 2, **caractérisé en ce qu'**il est configuré de sorte que la position de maintenance soit uniquement accessible après un retrait ou une ouverture du capotage inter-veines (20).

4. Ensemble moteur selon l'une quelconque des revendications précédentes, **caractérisé en ce que** les moyens de liaison comprennent des bielles de liaison (50) articulées au moins à leur extrémité (52) de raccordement au mât d'accrochage (202).

5. Ensemble moteur selon la revendication 4, **caractérisé en ce que** les bielles de liaison (50) sont rigidement liées au support (34).

6. Ensemble moteur selon l'une quelconque des revendications précédentes combinée à la revendication 2, **caractérisé en ce qu'**il comprend des moyens de maintien du support (34) dans sa position de fonctionnement.

7. Ensemble moteur selon la revendication 6, **caractérisé en ce que** les moyens de maintien comprennent des bielles de maintien (70) télescopiques présentant des extrémités (80) de raccordement au support (34), ainsi que des extrémités (72) de raccordement à un carter moteur (26).

8. Ensemble moteur selon la revendication 6, **caractérisé en ce que** les moyens de maintien comprennent un axe de maintien (88) logé dans un premier orifice de logement (90) prévu sur le mât d'accrochage (202), ainsi que dans un second orifice de logement (92) prévu sur une partie (86) de maintien du support, l'axe de maintien (88) étant maintenu dans ses orifices de logement associés (90, 92) par l'intermédiaire d'un couvercle (93) monté sur la partie (86) de maintien du support, et de préférence via un moyen élastique de rappel (94) agencé entre le couvercle (93) et l'axe de maintien (88) pour forcer ce dernier en direction du premier orifice de logement (90).

9. Ensemble moteur selon l'une quelconque des revendications précédentes, **caractérisé en ce que** le système d'échangeur (30) comprend au moins un conduit d'alimentation en air (36) dont une écope d'admission (38) coopère avec un passage d'admission d'air (40) agencé à travers le capotage inter-veines (20).

10. Ensemble moteur selon la revendication 9, **caractérisé en ce que** l'écope d'admission (40) présente une section de passage d'air commandable, de préférence via un volet commandé (48) monté mobile sur l'écope d'admission (38), ou sur le passage d'admission d'air (40) prévu à travers le capotage inter-veines (20).

## Patentansprüche

1. Motoranordnung (200) für ein Flugzeug, umfassend eine Doppelstrom-Turbomaschine (1), sowie einen Mast (202) zum Aufhängen der Turbomaschine, der dazu bestimmt ist, für die Aufhängung der Turbomaschine an einem Tragflächenelement des Flugzeugs zu sorgen, wobei die Turbomaschine ein Luft-Öl-Tauschersystem (30) umfasst, das in einem Zwischenstromfach (22) angeordnet ist, das radial nach außen durch eine Zwischenstromabdeckung (20) begrenzt ist, wobei das Tauschersystem mit Luft versorgt wird, die aus einem Sekundärstrom (14b) der Turbomaschine stammt, der radial nach innen durch die Zwischenstromabdeckung (20) begrenzt ist, und das Tauschersystem (30) von einem Träger (34) getragen wird, der in dem Zwischenstromfach (22) angeordnet ist,
**dadurch gekennzeichnet, dass** der Träger (34) mechanisch durch Verbindungsmittel (50), die die Zwischenstromabdeckung (20) durchqueren, mit dem Mast zum Aufhängen verbunden ist.

2. Motoranordnung nach Anspruch 1, **dadurch gekennzeichnet, dass** die Verbindungsmittel (50) konfiguriert sind, um es dem Träger (34) zu erlauben, zwischen einer Betriebsposition, die das Tauschersystem (30) im Inneren des Zwischenstromfaches (22) vorzugsweise so platziert, dass es radial ein oder mehrere Ausrüstungen (28) in dem Zwischenstromfach abdeckt, und einer Wartungsposition bewegt zu werden, in der dieser Träger (34) weiter von einer Längsmittelachse (2) der Turbomaschine entfernt ist, als in der Betriebsposition.

3. Motoranordnung nach Anspruch 2, **dadurch gekennzeichnet, dass** sie derart konfiguriert ist, dass die Wartungsposition nur nach einer Abnahme oder einer Öffnung der Zwischenstromabdeckung (20) zugänglich ist.

4. Motoranordnung nach einem der vorstehenden Ansprüche, **dadurch gekennzeichnet, dass** die Verbindungsmittel Verbindungstriebstangen (50) umfassen, die mindestens an ihrem Ende (52) zum Anschließen an den Mast zum Aufhängen (202) gelenkig sind.

5. Motoranordnung nach Anspruch 4, **dadurch gekennzeichnet, dass** die Verbindungstriebstangen (50) starr mit dem Träger (34) verbunden sind.

6. Motoranordnung nach einem der vorstehenden Ansprüche in Kombination mit Anspruch 2, **dadurch gekennzeichnet, dass** sie Mittel zum Halten des Trägers (34) in seiner Betriebsposition umfasst.

7. Motoranordnung nach Anspruch 6, **dadurch gekennzeichnet, dass** die Mittel zum Halten ausfahrbare Haltetriebstangen (70) umfassen, die Enden (80) zum Anschließen an den Träger (34), sowie Enden (72) zum Anschließen an ein Motorgehäuse (26) aufweisen.

8. Motoranordnung nach Anspruch 6, **dadurch gekennzeichnet, dass** die Mittel zum Halten eine Halteachse (88) umfassen, die in einer ersten Aufnahmeöffnung (90) aufgenommen ist, die an dem Mast zum Aufhängen (202) vorgesehen ist, sowie in einer zweiten Aufnahmeöffnung (92), die an einem Teil (86) zum Halten des Trägers vorgesehen ist, wobei die Halteachse (88) anhand eines Deckels (93) in ihren zugehörigen Aufnahmeöffnungen (90, 92) gehalten wird, der an dem Teil (86) zum Halten des Trägers montiert ist, und vorzugsweise anhand eines elastischen Rückstellmittels (94), das zwischen dem Deckel (93) und der Halteachse (88) angeordnet ist, um diese letztere in Richtung der ersten Aufnahmeöffnung (90) zu zwingen.

9. Motoranordnung nach einem der vorstehenden Ansprüche, **dadurch gekennzeichnet, dass** das Tauschersystem (30) mindestens eine Luftversorgungsleitung (36) umfasst, von der ein Einlassschöpfer (38) mit einem Lufteinlassdurchgang (40) zusammenwirkt, der durch die Zwischenstromabdeckung (20) hindurch angeordnet ist.

10. Motoranordnung nach Anspruch 9, **dadurch gekennzeichnet, dass** der Einlassschöpfer (40) einen steuerbaren Luftdurchgangsquerschnitt, vorzugsweise über eine gesteuerte Klappe (48), die beweglich an dem Einlassschöpfer (38), oder am Lufteinlassdurchgang (40), der durch die Zwischenstromabdeckung (20) hindurch vorgesehen ist, montiert ist, aufweist.

## Claims

1. An engine assembly (200) for an aircraft comprising a bypass turbomachine (1) as well as a hooking mast (202) of the turbomachine intended to ensure hooking of the turbomachine on a wing element of the aircraft, the turbomachine comprising an air-oil exchanger system (30) arranged in an inter-flow compartment (22) delimited radially outwards by an inter-flow cowling (20), the exchanger system being fed with air coming from a secondary flow path (14b) of the turbomachine delimited radially inwards by the inter-flow cowling (20), and the exchanger system (30) being supported by a support (34) arranged in the inter-flow compartment (22),
**characterised in that** said support (34) is mechanically linked to the hooking mast by connecting means (50) crossing the inter-flow cowling (20).

2. The engine assembly according to claim 1, **characterised in that** the connecting means (50) are configured to enable the support (34) to be displaced between an operating position placing the exchanger system (30) inside the inter-flow compartment (22), preferably so that it radially covers one or several piece(s) of equipment (28) within the inter-flow compartment, and a maintenance position in which this support (34) is further away from a longitudinal central axis (2) of the turbomachine than in the operating position.

3. The engine assembly according to claim 2, **characterised in that** it is configured so that the maintenance position is accessible only after removal or opening of the inter-flow cowling (20).

4. The engine assembly according to any one of the preceding claims, **characterised in that** the connecting means comprise connecting rods (50) hinged at least at their end (52) for connection to the hooking mast (202).

5. The engine assembly according to claim 4, **characterised in that** the connecting rods (50) are rigidly connected to the support (34).

6. The engine assembly according to any one of the preceding claims combined with claim 2, **characterised in that** it comprises means for holding the support (34) in its operating position.

7. The engine assembly according to claim 6, **characterised in that** the holding means comprise telescopic holding connecting rods (70) having ends (80) for connection to the support (34), as well as ends (72) for connection to an engine casing (26).

8. The engine assembly according to claim 6, **characterised in that** the holding means comprise a holding axis (88) housed within a first housing orifice (90) provided on the hooking mast (202), as well as within a second housing orifice (92) provided on a holding portion (86) of the support, the holding axis (88) being held within its associated housing orifices (90, 92) through a cap (93) mounted on the holding portion (86) of the support, and preferably via an elastic biasing means (94) arranged between the cap (93) and the holding axis (88) to urge the latter in the direction of the first housing orifice (90).

9. The engine assembly according to any one of the preceding claims, **characterised in that** the exchanger system (30) comprises at least one air inlet conduit (36) an intake scoop (38) of which cooperates with an air intake passage (40) arranged through the inter-flow cowling (20).

10. The engine assembly according to claim 9, **characterised in that** the intake scoop (40) has a controllable air passage section, preferably via a controlled flap (48) movably mounted on the intake scoop (38), or on the air intake passage (40) provided through the inter-flow cowling (20).
